# EUROPEAN PATENT APPLICATION

(11) **EP 4 621 413 A1**
(43) Date of publication of application: **24.09.2025**
(21) Application number: 24219029.6
(22) Date of filing: 11.12.2024
(51) Int. Cl.: G01N 35/08, B01J 19/00, G01N 1/38

(54) **APPARATUS, METHOD, AND PROGRAM**

(30) Priority: 19.03.2024 JP 2024043539
(71) Applicant: Yokogawa Electric Corporation, Tokyo 180-8750 (JP)
(72) Inventor: HATTORI, Yusuke, Musashino-shi, Tokyo, 180-8750 (JP)
(74) Representative: Hoffmann Eitle

(57) **Abstract**

There is provided an apparatus to predict a reaction amount of a third fluid flowing through a third flow channel obtained by a first fluid flowing through a first flow channel and a second fluid flowing through a second flow channel being mixed and reacted with each other, the apparatus comprising: an acquisition unit which acquires a first fluid spectrum of the first fluid, a second fluid spectrum of the second fluid, and a third fluid spectrum of the third fluid; a calculation unit which calculates a difference spectrum between the third fluid spectrum and a total spectrum of the first fluid spectrum and the second fluid spectrum; and a prediction unit which predicts a reaction amount of the third fluid using the difference spectrum.

## Description

### BACKGROUND

### 1. TECHNICAL FIELD

The present invention relates to an apparatus, a method and a program.

### 2. RELATED ART

Patent Document 1 and 2 describes "an optical analysis system and optical analysis method that can non-destructively analyze information about optical isomerism of a product material synthesized in a chemical reaction system with no need for extracting samples".

### Prior Art Document

### Patent Document

Patent Document 1: Japanese Patent No. 7087696
Patent Document 2: Japanese Patent No. 7192473

### SUMMARY

In the first aspect of the present invention, there is provided an apparatus to predict a reaction amount of a third fluid flowing through a third flow channel obtained by a first fluid flowing through a first flow channel and a second fluid flowing through a second flow channel being mixed and reacted with each other, the apparatus comprising: an acquisition unit which acquires a first fluid spectrum of the first fluid, a second fluid spectrum of the second fluid, and a third fluid spectrum of the third fluid; a calculation unit which calculates a difference spectrum between the third fluid spectrum and a total spectrum of the first fluid spectrum and the second fluid spectrum; and a prediction unit which predicts a reaction amount of the third fluid using the difference spectrum.

In the above-described apparatus, the calculation unit may calculate the total spectrum by summing up the first fluid spectrum and the second fluid spectrum that are weighted according to a mixing ratio of the first fluid and the second fluid in the third fluid.

In the above-described apparatus, the calculation unit may calculate the total spectrum by summing up the first fluid spectrum and the second fluid spectrum that are weighted according to the mixing ratio based on a flow speed of the first fluid and a flow speed of the second fluid. The calculation unit may calculate the total spectrum by adding a value obtained by multiplying a value of the first fluid spectrum by a first weight, to a value obtained by multiplying a value of the second fluid spectrum by a second weight. The calculation unit may set a ratio between the first weight and the second weight so as to be the same as the ratio between the flow speed of the first fluid and the flow speed of the second fluid.

The calculation unit may calculate the total spectrum by summing up the first fluid spectrum and the second fluid spectrum that are weighted according to the mixing ratio based on a set value of a pump to cause the first fluid to flow into the first flow channel and a set value of a pump to cause the second fluid to flow into the second flow channel. The calculation unit may set the ratio between the first weight and the second weight so as to be the same as the ratio between the set value of the pump to cause the first fluid to flow into the first flow channel and the set value of the pump to cause the second fluid to flow into the second flow channel.

In any of the above-described apparatuses, the calculation unit may calculate the total spectrum by summing up the first fluid spectrum and the second fluid spectrum that are weighted according to the mixing ratio based on a solvent volume of the first fluid and a solvent volume of the second fluid. The calculation unit may set the ratio between the first weight and the second weight so as to be the same as the ratio between the solvent volume of the first fluid and the solvent volume of the second fluid.

In any of the above-described apparatuses, the acquisition unit may acquire a plurality of third fluid spectra, each being identical to the third fluid spectrum, at a plurality of positions in the third flow channel, the calculation unit calculates a plurality of difference spectra, each being identical to the difference spectrum, between each of the plurality of third fluid spectra and the total spectrum of the first fluid spectrum and the second fluid spectrum, and the prediction unit predicts a reaction amount of the third fluid using the plurality of difference spectra. The prediction unit may calculate a reaction rate based on the plurality of reaction amounts of the third fluid that correspond to the plurality of difference spectra, respectively.

In any of the above-described apparatuses, the acquisition unit may acquire a plurality of third fluid spectra, each being identical to the third fluid spectrum, at a plurality of positions in the third flow channel, and the calculation unit may calculate the difference spectrum between an average spectrum of the plurality of third fluid spectra and the total spectrum of the first fluid spectrum and the second fluid spectrum.

In any of the above-described apparatuses, the calculation unit may calculate the difference spectrum between the third fluid spectrum and the total spectrum of the first fluid spectrum and the second fluid spectrum which were measured a predetermined period prior to measurement of the third fluid spectrum.

In the second aspect of the present invention, there is provided a method for predicting a reaction amount of a third fluid flowing through a third flow channel obtained by a first fluid flowing through a first flow channel and a second fluid flowing through a second flow channel being mixed and reacted with each other, the method comprising: acquiring a first fluid spectrum of the first fluid, a second fluid spectrum of the second fluid, and a third fluid spectrum of the third fluid; calculating a difference spectrum between the third fluid spectrum and a total spectrum of the first fluid spectrum and the second fluid spectrum; and predicting a reaction amount of the third fluid using the difference spectrum.

In the third aspect of the present invention, there is provided a program for predicting a reaction amount of a third fluid flowing through a third flow channel obtained by a first fluid flowing through a first flow channel and a second fluid flowing through a second flow channel being mixed and reacted with each other, the program being executed by a computer and causing the computer to function as an acquisition unit which acquires a first fluid spectrum of the first fluid, a second fluid spectrum of the second fluid, and a third fluid spectrum of the third fluid; a calculation unit which calculates a difference spectrum between the third fluid spectrum and a total spectrum of the first fluid spectrum and the second fluid spectrum; and a prediction unit which predicts a reaction amount of the third fluid using the difference spectrum.

Note that the summary clause does not necessarily describe all necessary features of the embodiments of the present invention. In addition, the invention may also be a sub-combination of the features described above.

### BRIEF DESCRIPTION OF THE DRAWINGS

Fig. 1 is a schematic view of a reaction system 10 according to the present embodiment.
Fig. 2 shows a block diagram of a control apparatus 30.
Fig. 3 shows an example of a reaction flow of the reaction system 10.
Fig. 4 shows a descriptive drawing of an example of a first fluid spectrum.
Fig. 5 shows a descriptive drawing of an example of a second fluid spectrum.
Fig. 6 shows a descriptive drawing of an example of a total spectrum.
Fig. 7 shows a descriptive drawing of an example of a third fluid spectrum.
Fig. 8 shows an example of a computer 2200 in which a plurality of aspects of the present invention may be wholly or partly embodied.

### DESCRIPTION OF EXEMPLARY EMBODIMENTS

The present invention will be described below through embodiments of the invention, but the following embodiments do not limit the invention according to the claims. In addition, not all of the combinations of features described in the embodiments are essential to the solution of the invention.

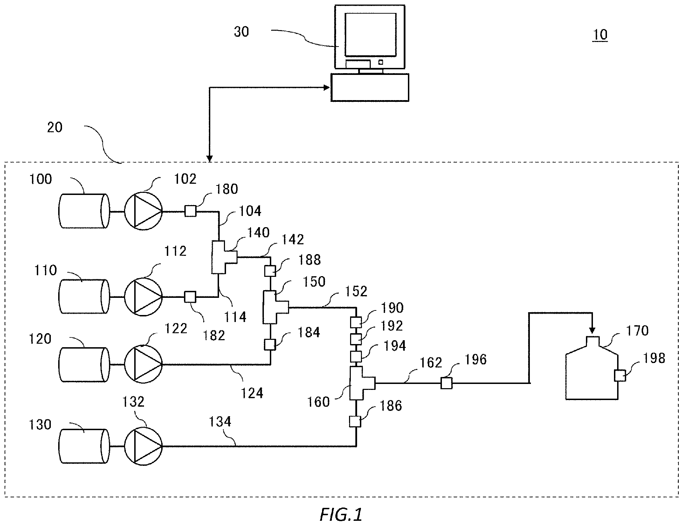

Fig. 1 is a schematic view of a reaction system 10 according to the present embodiment. The reaction system 10 generates a target substance such as peptide. The reaction system 10 includes a reaction apparatus 20 and a control apparatus 30.

The reaction apparatus 20 is connected to the control apparatus 30. As an example, the reaction apparatus 20 may be a flow reactor, such as a micro flow reactor, that generates a target substance by flow synthesis or the like. The reaction apparatus 20 includes a first material tank 100, a first pump 102, a first liquid-delivery tube 104, a second material tank 110, a second pump 112, a second liquid-delivery tube 114, a third material tank 120, a third pump 122, a third liquid-delivery tube 124, a fourth material tank 130, a fourth pump 132, a fourth liquid-delivery tube 134, a first mixer 140, a first reaction tube 142, a second mixer 150, a second reaction tube 152, a third mixer 160, a third reaction tube 162, a target substance tank 170, a first sensor unit 180, a second sensor unit 182, a third sensor unit 184, a fourth sensor unit 186, a fifth sensor unit 188, a sixth sensor unit 190, a seventh sensor unit 192, an eighth sensor unit 194, a ninth sensor unit 196, and a tenth sensor unit 198. Note that, in the following description, one or more of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, or the tenth sensor unit 198 are simply referred to as a sensor unit or a plurality of sensor units. The liquid-delivery tubes and the reaction tubes in the reaction apparatus 20 form flow channels from the material tanks to the target substance tank 170.

The first material tank 100 is connected to the first mixer 140 via the first pump 102 and the first liquid-delivery tube 104. The first material tank 100 accommodates the liquid first material. The first pump 102 supplies the first material from the first material tank 100 to the first liquid-delivery tube 104 at a flow speed or a flow volume according to a preset reaction condition. The first liquid-delivery tube 104 has a flow channel formed therein. The first liquid-delivery tube 104 may be a through hole formed in a board-shaped cell or a tube made of metal or resin. A first material fluid, which is the first material, flows into one of the inlets of the first mixer 140 through the flow channel of the first liquid-delivery tube 104.

The second material tank 110 is connected to the first mixer 140 via the second pump 112 and the second liquid-delivery tube 114. The second material tank 110 accommodates the liquid second material. The second pump 112 supplies the second material from the second material tank 110 to the second liquid-delivery tube 114 at a flow speed or a flow volume according to a preset reaction condition. The second liquid-delivery tube 114 has a flow channel formed therein. The second liquid-delivery tube 114 may be a through hole formed in a board-shaped cell or a tube made of metal or resin. The second material fluid, which is the second material, flows into another of the inlets of the first mixer 140 through the flow channel of the second liquid-delivery tube 114.

The third material tank 120 is connected to the second mixer 150 via the third pump 122 and the third liquid-delivery tube 124. The third material tank 120 accommodates the liquid third material. The third pump 122 supplies the third material from the third material tank 120 to the third liquid-delivery tube 124 at a flow speed or a flow volume according to a preset reaction condition. The third liquid-delivery tube 124 has a flow channel formed therein. The third liquid-delivery tube 124 may be a through hole formed in a board-shaped cell or a tube made of metal or resin. The third material fluid, which is the third material, flows into one of the inlets of the second mixer 150 through the flow channel of the third liquid-delivery tube 124.

The fourth material tank 130 is connected to the third mixer 160 via the fourth pump 132 and the fourth liquid-delivery tube 134. The fourth material tank 130 accommodates the liquid fourth material. The fourth pump 132 supplies the fourth material from the fourth material tank 130 to the fourth liquid-delivery tube 134 at a flow speed or a flow volume according to a preset reaction condition. The fourth liquid-delivery tube 134 has a flow channel formed therein. The fourth liquid-delivery tube 134 may be formed of metal or resin and may be a tube or a through hole formed in a board-shaped cell. The fourth material fluid, which is the fourth material, flows into one of the inlets of the third mixer 160 through the flow channel of the fourth liquid-delivery tube 134.

An outlet of the first mixer 140 is connected to one end of the first reaction tube 142. The first mixer 140 may be a static mixer such as a T-shaped mixer or a Y-shaped mixer. The first mixer 140 mixes, in its inside, the first material fluid and the second material fluid flowing in from the two inlets and discharges the mixture as the first reaction fluid to the first reaction tube 142.

Another end of the first reaction tube 142 is connected to the second mixer 150. The first reaction tube 142 may be a through hole formed in a board-shaped cell or a tube made of metal or resin. The first reaction fluid flows through the flow channel inside the first reaction tube 142 and is discharged to another of the inlets of the second mixer 150. A reaction of the first reaction fluid proceeds while the first reaction fluid flows through the first reaction tube 142, and an intermediate is generated by the reaction. A reaction portion in which the reaction proceeds in the first reaction tube 142 may have a length, a width, or a shape that is set to adjust the reaction conditions such as reaction time.

An outlet of the second mixer 150 is connected to one end of the second reaction tube 152. The second mixer 150 may be a static mixer such as a T-shaped mixer or a Y-shaped mixer. The second mixer 150 mixes, in its inside, the first reaction fluid and the third material fluid flowing in from the two inlets and discharges the mixture as the second reaction fluid to the second reaction tube 152.

Another end of the second reaction tube 152 is connected to the third mixer 160. The second reaction tube 152 may be a through hole formed in a board-shaped cell or a tube made of metal or resin. The second reaction fluid flows through the flow channel inside the second reaction tube 152 and is discharged to another of the inlets of the third mixer 160. A reaction of the second reaction fluid proceeds while the second reaction fluid flows through the second reaction tube 152, and an intermediate is generated by the reaction. A reaction portion in which the reaction proceeds in the second reaction tube 152 may have a length, a width, or a shape that is set to adjust the reaction conditions such as reaction time.

An outlet of the third mixer 160 is connected to one end of the third reaction tube 162. The third mixer 160 may be a static mixer such as a T-shaped mixer or a Y-shaped mixer. The third mixer 160 mixes, in its inside, the second reaction fluid and the fourth material fluid flowing in from the two inlets and discharges the mixture as the third reaction fluid to the third reaction tube 162.

Another end of the third reaction tube 162 is connected to the target substance tank 170. The third reaction tube 162 may be a through hole formed in a board-shaped cell or a tube made of metal or resin. The third reaction fluid flows through the flow channel inside the third reaction tube 162 and is discharged into the target substance tank 170. A reaction of the third reaction fluid proceeds while the third reaction fluid flows through the third reaction tube 162, and a final target substance by the reaction is generated. A reaction portion in which the reaction proceeds in the third reaction tube 162 may have a length, a width, or a shape that is set to adjust the reaction conditions such as reaction time.

The target substance tank 170 accommodates the third reaction fluid discharged from the third reaction tube 162. Note that, between the third reaction tube 162 and the target substance tank 170, an apparatus, such as a filter, may be arranged to separate the by-products and the final target substance from the third reaction fluid to extract the final target substance.

The first sensor unit 180 is arranged in the first liquid-delivery tube 104 and detects a state of the first material fluid in the first liquid-delivery tube 104. The first sensor unit 180 may detect a fluid spectrum of the first material fluid in the first liquid-delivery tube 104. The first sensor unit 180 may include at least one of a Raman spectrometer, a near-infrared spectrometer, an infrared spectrometer, an ultraviolet spectrometer, a fluorescence spectrometer, or a visible spectrometer to detect the fluid spectrum. The first sensor unit 180 may further detect at least one of a pressure, a flow speed, a flow volume, or a temperature of the fluid in the first liquid-delivery tube 104. Here, the fluid spectrum may be an absorption spectrum, a fluorescence spectrum, or a Raman scattering spectrum in the ultraviolet-visible region (wavelength 10 nm to 800 nm), in the near-infrared region (wavelength 800 nm to 2500 nm), or in the infrared region (wavelength 2500 nm to 25000 nm), , and the same applies in the following.

The second sensor unit 182 is arranged in the second liquid-delivery tube 114 and detects a state of the second material fluid in the second liquid-delivery tube 114. The second sensor unit 182 may detect a fluid spectrum of the second material fluid in the second liquid-delivery tube 114. The second sensor unit 182 may include at least one of a Raman spectrometer, a near-infrared spectrometer, an infrared spectrometer, an ultraviolet spectrometer, a fluorescence spectrometer, or a visible spectrometer to detect the fluid spectrum. The second sensor unit 182 may further detect at least one of a pressure, a flow speed, a flow volume, or a temperature of the second material fluid in the second liquid-delivery tube 114.

The third sensor unit 184 is arranged in the third liquid-delivery tube 124 and detects a state of the third material fluid in the third liquid-delivery tube 124. The third sensor unit 184 may detect a fluid spectrum of the third material fluid in the third liquid-delivery tube 124. The third sensor unit 184 may include at least one of a Raman spectrometer, a near-infrared spectrometer, an infrared spectrometer, an ultraviolet spectrometer, a fluorescence spectrometer, or a visible spectrometer to detect the fluid spectrum. The third sensor unit 184 may further detect at least one of a pressure, a flow speed, a flow volume, or a temperature of the third material fluid in the third liquid-delivery tube 124.

The fourth sensor unit 186 is arranged in the fourth liquid-delivery tube 134 and detects a state of the fourth material fluid in the fourth liquid-delivery tube 134. The fourth sensor unit 186 may detect a fluid spectrum of the fourth material fluid in the fourth liquid-delivery tube 134. The fourth sensor unit 186 may include at least one of a Raman spectrometer, a near-infrared spectrometer, an infrared spectrometer, an ultraviolet spectrometer, a fluorescence spectrometer, or a visible spectrometer to detect the fluid spectrum. The fourth sensor unit 186 may further detect at least one of a pressure, a flow speed, a flow volume, or a temperature of the fourth material fluid in the fourth liquid-delivery tube 134.

The fifth sensor unit 188 is arranged in the first reaction tube 142 and detects a state of the first reaction fluid in the first reaction tube 142. The fifth sensor unit 188 may be arranged immediately before the second mixer 150 and may be arranged, for example, at a position on the downstream side of the reaction portion in which the reaction in the first reaction tube 142 proceeds (that is, a position where the reaction in the first reaction tube 142 has completed). The fifth sensor unit 188 may detect the fluid spectrum of the first reaction fluid in the first reaction tube 142. The fifth sensor unit 188 may include at least one of a Raman spectrometer, a near-infrared spectrometer, an infrared spectrometer, an ultraviolet spectrometer, a fluorescence spectrometer, or a visible spectrometer to detect the fluid spectrum. The fifth sensor unit 188 may further detect at least one of a pressure, a flow speed, a flow volume, or a temperature of the first reaction fluid in the first reaction tube 142.

The sixth sensor unit 190, the seventh sensor unit 192, and the eighth sensor unit 194 are arranged in the second reaction tube 152 and detect a state of the second reaction fluid in the second reaction tube 152. The sixth sensor unit 190, the seventh sensor unit 192, and the eighth sensor unit 194 may each detect the fluid spectrum of the second reaction fluid in the second reaction tube 152. The sixth sensor unit 190, the seventh sensor unit 192, and the eighth sensor unit 194 are arranged in different positions of the second reaction tube 152 and may detect the fluid spectrum at the different positions of the second reaction tube 152. The sixth sensor unit 190, the seventh sensor unit 192, and the eighth sensor unit 194 may be arranged at three different positions on the downstream side of the reaction portion in which the reaction in the second reaction tube 152 proceeds (that is, the positions where the reaction in the second reaction tube 152 has completed), or may each be arranged in the reaction portion in which the reaction proceeds and in the downstream side of the reaction portion. The sixth sensor unit 190, the seventh sensor unit 192, and the eighth sensor unit 194 may each include at least one of a Raman spectrometer, a near-infrared spectrometer, an infrared spectrometer, an ultraviolet spectrometer, a fluorescence spectrometer, or a visible spectrometer to detect the fluid spectrum. The sixth sensor unit 190, the seventh sensor unit 192, and the eighth sensor unit 194 may further detect at least one of a pressure, a flow speed, a flow volume, or a temperature of the second reaction fluid in the second reaction tube 152.

The ninth sensor unit 196 is arranged in the third reaction tube 162 and detects a state of the third reaction fluid in the third reaction tube 162. The ninth sensor unit 196 may be arranged at a position on the downstream side of the reaction portion in which the reaction in the third reaction tube 162 proceeds (that is, a position where the reaction in the third reaction tube 162 has completed). The ninth sensor unit 196 may detect the fluid spectrum of the third reaction fluid in the third reaction tube 162. The ninth sensor unit 196 may include at least one of a Raman spectrometer, a near-infrared spectrometer, an infrared spectrometer, an ultraviolet spectrometer, a fluorescence spectrometer, or a visible spectrometer to detect the fluid spectrum. The ninth sensor unit 196 may further detect at least one of a pressure, a flow speed, a flow volume, or a temperature of the third reaction fluid in the third reaction tube 162.

The tenth sensor unit 198 is arranged in the target substance tank 170 and detects a state of the target substance in the target substance tank 170. The tenth sensor unit 198 may detect the optical spectrum of the target substance in the target substance tank 170. The tenth sensor unit 198 may include at least one of a Raman spectrometer, a near-infrared spectrometer, an infrared spectrometer, an ultraviolet spectrometer, a fluorescence spectrometer, or a visible spectrometer to detect the optical spectrum. The tenth sensor unit 198 may further detect the temperature of the target substance in the target substance tank 170.

The control apparatus 30 is connected to each component of the reaction apparatus 20. The control apparatus 30 may be a computer such as a PC, a tablet PC, a smartphone, a workstation, a server computer, or a general purpose computer, or may be a computer system in which a plurality of computers are connected. Such a computer system is also a computer in a broad sense. In addition, the control apparatus 30 may be implemented by one or more executable virtual computer environments in the computer. Alternatively, the control apparatus 30 may be a dedicated computer designed for a flow reactor or a dedicated hardware achieved by a dedicated circuit. In addition, the control apparatus 30 may be achieved by cloud computing.

The control apparatus 30 receives a measurement result indicating the state of the fluid in the flow channel of the reaction apparatus 20 from at least one of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, or the tenth sensor unit 198. The control apparatus 30 may predict the reaction state of the fluid from the measurement result and transmit control data according to the prediction result to the reaction apparatus 20 to control the reaction apparatus 20.

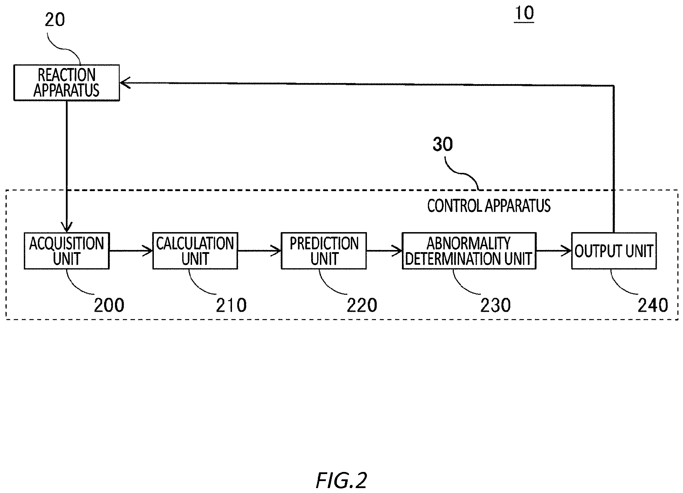

Fig. 2 shows a more detailed block diagram of the control apparatus 30. The control apparatus 30 predicts a reaction amount of the third fluid flowing through a third flow channel obtained by the first fluid flowing through a first flow channel and the second fluid flowing through a second flow channel in the reaction apparatus 20 being mixed and reacted with each other. Here, the first flow channel, the second flow channel, and the third flow channel may each be a flow channel inside at least one of the first liquid-delivery tube 104, the second liquid-delivery tube 114, the third liquid-delivery tube 124, the fourth liquid-delivery tube 134, the first reaction tube 142, the second reaction tube 152, or the third reaction tube 162 in the reaction apparatus 20. The control apparatus 30 includes an acquisition unit 200, a calculation unit 210 a prediction unit 220, an abnormality determination unit 230, and an output unit 240.

The acquisition unit 200 is connected to the reaction apparatus 20. The acquisition unit 200 acquires the first fluid spectrum of the first fluid, the second fluid spectrum of the second fluid, and the third fluid spectrum of the third fluid. The acquisition unit 200 may receive a measurement result indicating the state of the fluid from at least one of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, or the tenth sensor unit 198. The acquisition unit 200 may calculate the first fluid spectrum of the first fluid, the second fluid spectrum of the second fluid, and the third fluid spectrum of the third fluid from the received measurement result, or alternatively may receive the measurement result indicating the first fluid spectrum of the first fluid, the second fluid spectrum of the second fluid, and the third fluid spectrum of the third fluid calculated in the reaction apparatus 20.

The calculation unit 210 is connected to the acquisition unit 200. The calculation unit 210 calculates a difference spectrum between the third fluid spectrum and a total spectrum of the first fluid spectrum and the second fluid spectrum. The calculation unit 210 may calculate the total spectrum by summing up the first fluid spectrum and the second fluid spectrum that are weighted according to a mixing ratio of the first fluid and the second fluid in the third fluid.

The prediction unit 220 is connected to the calculation unit 210. The prediction unit 220 predicts a reaction amount of the third fluid, using the difference spectrum calculated by the calculation unit 210.

The abnormality determination unit 230 is connected to the prediction unit 220. The abnormality determination unit 230 determines whether a reaction abnormality has occurred in the reaction apparatus 20 based on the reaction amount of the third fluid predicted by the prediction unit 220.

The output unit 240 is connected to the abnormality determination unit 230 and the reaction apparatus 20. The output unit 240 outputs control data to the reaction apparatus 20 according to the determination result in the abnormality determination unit 230. The output unit 240 may transmit, to an external display apparatus, display data to display the determination result in the abnormality determination unit 230.

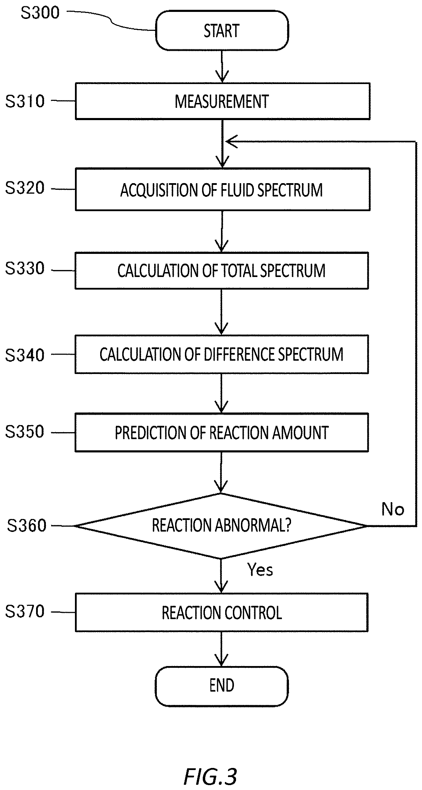

Fig. 3 shows an example of a reaction flow of the reaction system 10. In the reaction flow of Fig. 3, material solutions including different amino acids are supplied to each flow channel from the first material tank 100, the second material tank 110, the third material tank 120, and the fourth material tank 130 to synthesize a peptide in the reaction apparatus 20 shown in Fig. 1, as an example. The reaction flow of Fig. 3 mainly shows an example in which the control apparatus 30 determines a reaction abnormality of the fluid in the first reaction tube 142, the third liquid-delivery tube 124, and the second reaction tube 152 connected to the second mixer 150, as an example. Note that, it is not limited to this, and the control apparatus 30 may determine a reaction abnormality of the fluid in the first liquid-delivery tube 104, the second liquid-delivery tube 114, and the first reaction tube 142 connected to the first mixer 140 or a reaction abnormality of the fluid in the second reaction tube 152, the fourth liquid-delivery tube 134 and the third reaction tube 162 connected to the third mixer 160.

In step S300, the reaction apparatus 20 starts the reaction according to a reaction condition (such as a temperature, a flow volume, a flow speed, and a pressure of the fluid in the flow channel) set by a user. The reaction apparatus 20 operates the first pump 102, the second pump 112, the third pump 122, and the fourth pump 132 according to a set value (such as a discharge amount, a pressure, or a rotational speed, as an example) set in the reaction condition to cause each material to flow into the flow channel.

In step S310, each of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, and the tenth sensor unit 198 detects a measured value indicating the fluid spectrum of the fluid in the flow channel.

As an example, the third sensor unit 184 guides an irradiation light having the ultraviolet-visible region (10 nm to 800 nm), the near-infrared region (wavelength 800 nm to 2500 nm), or the infrared region (wavelength 2500 nm to 25000 nm) from a light source such as a semiconductor laser into the inside of the flow channel via a light-guiding component such as an optical fiber, and irradiates the fluid therewith. The third sensor unit 184 guides the measurement light that has been transmitted through the inside of the flow channel into a light detector such as a photodiode via other light-guiding components and detects, with the light detector, the fluid spectrum indicating an intensity, an amount of light absorption, or the like for each wavelength of the measurement light. Each of the first sensor unit 180, the second sensor unit 182, the fourth sensor unit 186, the fifth sensor unit 188, the sixth sensor unit 190, the seventh sensor unit 192, the eighth sensor unit 194, the ninth sensor unit 196, and the tenth sensor unit 198 may detect the fluid spectrum in a similar manner to the third sensor unit 184.

Each of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, and the tenth sensor unit 198 may further detect a measured value indicating a pressure, a flow speed, a flow volume, and a temperature related to the fluid inside the flow channel in which it is arranged. Each of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, and the tenth sensor unit 198 may include at least one of a pressure sensor, a flow speed sensor, a flow volume sensor, or a temperature sensor.

In step S320, the acquisition unit 200 acquires the fluid spectrum. The acquisition unit 200 may receive the fluid spectrum from each of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, and the tenth sensor unit 198. The acquisition unit 200 may perform preprocessing, such as baseline correction, first derivation, or second derivation, on the fluid spectrum. The acquisition unit 200 may further acquire, from the reaction apparatus 20, the set value of the reaction condition set by the user, or at least one of the temperature, the flow volume, or the pressure of the fluid detected by each of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, and the tenth sensor unit 198. The acquisition unit 200 may acquire a measurement time of the measured value together with the measured value including the fluid spectrum.

In step S330, the calculation unit 210 calculates a total spectrum of the fluid spectra of the first fluid and the second fluid (in a previous stage of the mixer that mixes the first fluid and the second fluid) as subjects of prediction. In the present example, the calculation unit 210 calculates the total spectrum based on the first fluid spectrum of the first reaction fluid acquired from the fifth sensor unit 188 and the second fluid spectrum of the third material fluid acquired from the third sensor unit 184. The calculation unit 210 may calculate the total spectrum by weighting the first fluid spectrum and the second fluid spectrum according to the mixing ratio of the first reaction fluid and the third material fluid and summing them up for each wavelength (wavenumber).

As an example, the calculation unit 210 can add a value obtained by multiplying the first fluid spectrum value a1 by the first weight b1 (a1 x b1) to a value obtained by multiplying the second fluid spectrum value a2 by the second weight b2 (a2 x b2) in any wavelength in the wavelength region of the measurement light to calculate the total spectrum (a1 x b1 + a2 x b2). The calculation unit 210 can calculate a distribution of the total spectrum in a wavelength region by calculating the total spectrum while changing the wavelength across the wavelength region of the measurement light. A ratio between the first weight b 1 and the second weight b2 may be set based on the mixing ratio of the corresponding fluids (in the present example, the mixing ratio of the first reaction fluid and the third material fluid). A total of the first weight b 1 and the second weight b2 may be set to be one. By weighting the fluid spectra based on the mixing ratio of the first fluid and the second fluid and summing up the fluid spectra, the control apparatus 30 can perform the prediction reflecting the influence of the first fluid and the second fluid on the third fluid spectrum as a subject of prediction. Hereinafter, an example of the setting of the first weight b1 and the second weight b2 will be described.

The calculation unit 210 may calculate the total spectrum by summing up the first fluid spectrum and the second fluid spectrum that are weighted according to the mixing ratio based on the flow speed of the first fluid and the flow speed of the second fluid. The calculation unit 210 may set the ratio between the first weight b 1 and the second weight b2 so as to be the same as the ratio between the flow speed of the first fluid and the flow speed of the second fluid. In the present example, the calculation unit 210 may set the ratio between the first weight b1 and the second weight b2 so as to be the same as the ratio between the flow speed of the first reaction fluid acquired from the fifth sensor unit 188 and the flow speed of the third material fluid acquired from the third sensor unit 184. Note that, if the first flow channel and the second flow channel have different cross-sectional areas, the calculation unit 210 may set the ratio between the first weight b 1 and the second weight b2 so as to be the same as the ratio between a value obtained by multiplying the flow speed of the first fluid by the cross-sectional area of the first flow channel and a value obtained by multiplying the flow speed of the second fluid by the cross-sectional area of the second flow channel.

Alternatively, the calculation unit 210 may calculate the total spectrum by summing up the first fluid spectrum and the second fluid spectrum that are weighted according to the mixing ratio based on a set value of the pump to cause the first fluid to flow into the first flow channel and a set value of the pump to cause the second fluid to flow into the second flow channel. The calculation unit 210 may set the ratio between the first weight b 1 and the second weight b2 so as to be the same as the ratio between the set value of the pump to cause the first fluid to flow into the first flow channel and the set value of the pump to cause the second fluid to flow into the second flow channel. The set value of the pump includes at least one of a discharge amount, a pressure or a rotational speed, as an example. In the present example, the calculation unit 210 may set the ratio between the first weight b1 and the second weight b2 so as to be the same as the ratio between the total of the set value of the first pump 102 and the set value of the second pump 112, and the set value of the third pump 122.

Alternatively, the calculation unit 210 may calculate the total spectrum by summing up the first fluid spectrum and the second fluid spectrum that are weighted according to the mixing ratio based on a solvent volume of the first fluid and a solvent volume of the second fluid. The calculation unit 210 may set the ratio between the first weight b1 and the second weight b2 so as to be the same as the ratio between the solvent volume of the first fluid and the solvent volume of the second fluid. The calculation unit 210 may calculate the solvent volume of the first fluid by multiplying a flow volume of the first fluid acquired by the acquisition unit 200 by a concentration of the solvent in the material tank. In the present example, the calculation unit 210 may set the ratio between the first weight b1 and the second weight b2 so as to be the same as the ratio between the solvent volume of the first reaction fluid and the solvent volume of the third material fluid. The calculation unit 210 may calculate a value, as the solvent volume of the first reaction fluid, by adding a value obtained by multiplying the flow volume of the first material fluid in the flow channel of the first liquid-delivery tube 104 detected by the first sensor unit 180 by the concentration of the solvent in the first material tank 100, to a value obtained by multiplying the flow volume of the second material fluid in the flow channel of the second liquid-delivery tube 114 detected by the second sensor unit 182 by the concentration of the solvent in the second material tank 110. The calculation unit 210 may calculate a value, as the solvent volume of the third material fluid, by multiplying the flow volume of the third material fluid in the flow channel of the third liquid-delivery tube 124 detected by the third sensor unit 184 by the concentration of the solvent in the third material tank 120. Alternatively, the calculation unit 210 may calculate the total spectrum by summing up the first fluid spectrum and the second fluid spectrum that are weighted with weights obtained by using a multivariate analysis. The calculation unit 210 may calculate and set the ratio between the first weight b1 and the second weight b2 according to the mixing ratio of the first fluid and the second fluid (for example, the ratio of the solvent volume of the first fluid and the solvent volume of the second fluid) using MCR (Multivariate Curve Resolution).

In step S340, the calculation unit 210 calculates a difference spectrum by calculating a difference between the calculated total spectrum and the third fluid spectrum of the third fluid. The calculation unit 210 may calculate the difference between the value of the total spectrum and the value of the third fluid spectrum at any wavelength in the wavelength region of the measurement light. The calculation unit 210 can calculate a distribution of the difference spectrum by calculating the difference spectrum while changing the wavelength across the wavelength region of the measurement light.

If the acquisition unit 200 acquires the third fluid spectrum at a plurality of positions in the third flow channel, the calculation unit 210 may calculate each of the difference spectra between the plurality of third fluid spectra and the total spectrum of the first fluid spectrum and the second fluid spectrum. The calculation unit 210 may calculate the plurality of difference spectra using the third fluid spectra detected at different positions in one reaction tube through which the third fluid flows. In the present example, the calculation unit 210 may calculate three difference spectra by calculating the differences between the fluid spectra acquired by the acquisition unit 200 from each of the sixth sensor unit 190, the seventh sensor unit 192, and the eighth sensor unit 194 arranged in the second reaction tube 152, and the total spectrum.

If the acquisition unit 200 acquires the third fluid spectrum at a plurality of positions in the third flow channel, the calculation unit 210 may calculate the difference spectrum between an average spectrum of the plurality of third fluid spectra and the total spectrum of the first fluid spectrum and the second fluid spectrum. The calculation unit 210 may calculate one difference spectrum using the third fluid spectra detected at different positions in one reaction tube through which the third fluid flows. In the present example, the calculation unit 210 may calculate the average spectrum of the fluid spectra acquired by the acquisition unit 200 from each of the sixth sensor unit 190, the seventh sensor unit 192, and the eighth sensor unit 194 arranged in the second reaction tube 152, and then calculate the difference between the calculated average spectrum and the total spectrum to calculate the difference spectrum. By using the average spectrum, the calculation unit 210 can reduce the influence of a detection error of each sensor unit on the difference spectrum.

The calculation unit 210 may calculate the difference spectrum between the third fluid spectrum and a total spectrum of the first fluid spectrum and the second fluid spectrum which were measured a predetermined period prior to the measurement of the third fluid spectrum. The calculation unit 210 may determine the total spectrum using the measurement time acquired by the acquisition unit 200. By using the first fluid spectrum and the second fluid spectrum that were measured prior to the measurement of the third fluid spectrum as a subject of prediction, the calculation unit 210 can calculate the difference spectrum using the fluid spectra of the first fluid and the second fluid actually included in the third fluid. The calculation unit 210 may calculate the difference spectrum using the third fluid spectrum and a total spectrum of the first fluid spectrum and the second fluid spectrum which were measured equal to more than the reaction time of the third fluid prior to the measurement time of the third fluid spectrum. Alternatively, if the sensor unit cyclically performs the measurement, the calculation unit 210 may calculate the difference spectrum using the third fluid spectrum and a total spectrum of the first fluid spectrum and the second fluid spectrum which were measured a predetermined number of cycles prior to (one cycle prior to, as an example) the measurement time of the third fluid spectrum.

In the present example, the difference spectrum may be calculated by calculating a difference between the third fluid spectrum acquired by the acquisition unit 200 from at least one of the sixth sensor unit 190, the seventh sensor unit 192, or the eighth sensor unit 194 arranged in the second reaction tube 152, and a total spectrum of the first fluid spectrum and the second fluid spectrum which were measured a predetermined period prior to the measurement of the third fluid spectrum.

In step S350, the prediction unit 220 predicts a reaction amount of the third fluid using the difference spectrum. The prediction unit 220 may predict an amount of the target substance of the reaction in the third fluid (such as a concentration of the target substance in the third fluid or a residual amount of the material, as an example), or the presence or absence of the target substance in the third fluid. The prediction unit 220 may predict the amount of the target substance in the third fluid corresponding to the calculated difference spectrum, based on a calibration curve that indicates the relationship between a value of the difference spectrum (a peak value or a wavelength at which the peak appears, as an example) in a wavelength (wavenumber) range corresponding to the target substance and the amount of the target substance. The prediction unit 220 may include the calibration curve previously obtained by experiments or the like. In the present example, the prediction unit 220 may predict a concentration of the intermediate generated by the reaction in the second reaction tube 152, by using the difference spectrum based on the calibration curve. As the calibration curve algorithm, PLS ( Partial Least Square), PCR (Principal Component Regression), MLR (Multivariable Linear Regression), or the like may be used.

The prediction unit 220 may predict the reaction amount of the third fluid using a plurality of difference spectra. The prediction unit 220 may predict a plurality of reaction amounts that correspond to the plurality of difference spectra, respectively. The prediction unit 220 may calculate a reaction rate based on the plurality of reaction amounts that correspond to the plurality of difference spectra, respectively. The prediction unit 220 may calculate the reaction rate by dividing the difference in the reaction amount between the plurality of measurement positions of the plurality of third fluid spectra by an interval (length of the flow channel) between the corresponding measurement positions. In the present example, the prediction unit 220 may predict each concentration of the intermediate generated by the reaction in the second reaction tube 152, by using the third fluid spectrum acquired from the sixth sensor unit 190, the seventh sensor unit 192, or the eighth sensor unit 194, based on the calibration curve. The prediction unit 220 may calculate the reaction rate by dividing the difference between the concentration corresponding to the third fluid spectrum acquired from the sixth sensor unit 190 and the concentration corresponding to the third fluid spectrum acquired from the seventh sensor unit 192, by the length of the flow channel (the interval) between the sixth sensor unit 190 and the seventh sensor unit 192. Similarly, the prediction unit 220 may calculate the reaction rate by dividing the difference between the concentration corresponding to the third fluid spectrum acquired from the seventh sensor unit 192 and the concentration corresponding to the third fluid spectrum acquired from the eighth sensor unit 194, by the length of the flow channel (the interval) between the seventh sensor unit 192 and the eighth sensor unit 194. Alternatively, the prediction unit 220 may calculate an average value of the plurality of reaction amounts.

In step S360, the abnormality determination unit 230 determines whether a reaction abnormality has occurred in the third flow channel from the reaction amount of the predicted third fluid. The abnormality determination unit 230 may determine that the reaction abnormality has occurred if the predicted reaction amount of the third fluid is less than a predetermined threshold. In addition, the abnormality determination unit 230 may determine that the reaction abnormality has occurred if the reaction rate calculated by the prediction unit 220 is less than a predetermined threshold. Here, the predetermined threshold may be determined by a user or the like according to a theoretical value of the reaction amount of the third fluid. The control apparatus 30 may predict the reaction amount of the fluid for each reaction tube in the reaction apparatus 20, and the abnormality determination unit 230 may identify the reaction tube, among the plurality of reaction tubes, in which a predicted reaction amount indicates an abnormality.

If the abnormality determination unit 230 determines that the reaction abnormality has occurred (Yes in Fig. 3), the control apparatus 30 proceeds to step S370, and if the abnormality determination unit 230 determines that the reaction abnormality has not occurred (No in Fig. 3), the control apparatus 30 proceeds to step S310.

In step S370, the output unit 240 may transmit, to the reaction apparatus 20, display data to cause the occurrence of the reaction abnormality determined by the abnormality determination unit 230 to be displayed. For example, the output unit 240 may transmit, to the reaction apparatus 20, the display data showing the reaction tube, among the plurality of reaction tubes (the first reaction tube 142, the second reaction tube 152, and the third reaction tube 162) that has been identified to have the reaction abnormality by the abnormality determination unit 230. In addition, the output unit 240 may transmit, to the reaction apparatus 20, control data to stop the operation in the reaction apparatus 20.

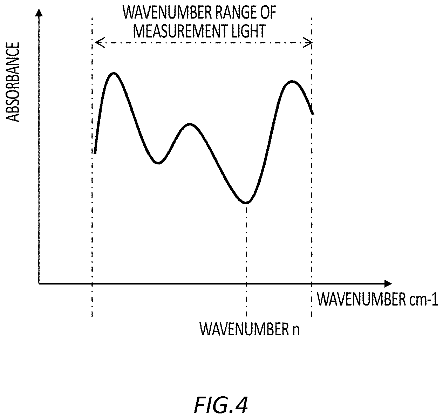

Fig. 4 shows a descriptive drawing of an example of the first fluid spectrum. The example of Fig. 4 shows, as the first fluid spectrum, an absorption spectrum measured by the fifth sensor unit 188, with the wavenumbers indicated on the horizontal axis and the absorbance indicated on the vertical axis. In Fig. 4, the wavenumber n shows one wavenumber in the wavenumber range of the measurement light. The fifth sensor unit 188 can irradiate the first reaction fluid flowing through the flow channel in the first reaction tube 142 with the irradiation light, detect the measurement light transmitted through the fluid, and thus measure the absorbance from the intensity of measurement light at each wavenumber. The first fluid spectrum in Fig. 4 has a plurality of peaks derived from materials such as the solvent and the amino acid in the first reaction fluid.

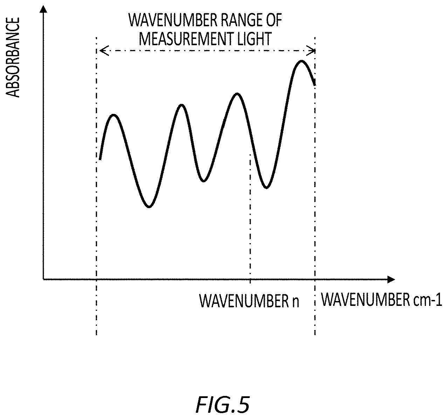

Fig. 5 shows a descriptive drawing of an example of the second fluid spectrum. The example of Fig. 5 shows, as the second fluid spectrum, an absorption spectrum measured by the third sensor unit 184, with the wavenumbers indicated on the horizontal axis and the absorbance indicated on the vertical axis. In Fig. 5, the wavenumber n shows one wavenumber in the wavenumber range of the measurement light. The third sensor unit 184 can irradiate the third material fluid flowing through the flow channel in the third liquid-delivery tube 124 with the irradiation light, detect the measurement light transmitted through the fluid, and thus measure the absorbance from the intensity of measurement light at each wavenumber. The second fluid spectrum in Fig. 5 has a plurality of peaks derived from materials such as the solvent and the amino acid in the third material fluid.

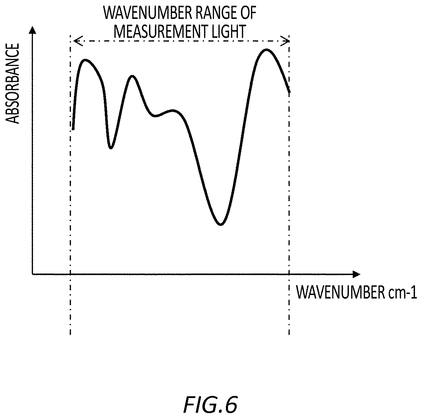

Fig. 6 shows a descriptive drawing of an example of the total spectrum. The example of Fig. 6 shows the total spectrum of the first fluid spectrum in Fig. 4 and the second fluid spectrum in Fig. 5, with the wavenumbers indicated on the horizontal axis and the absorbance indicated on the vertical axis. For example, the calculation unit 210 weights the absorbance of the first fluid spectrum shown in Fig. 4 and the absorbance of the second fluid spectrum shown in Fig. 5 at the wavenumber n according to the mixing ratio of the fluids and sums up them to calculate the total spectrum at the wavenumber n. The calculation unit 210 calculates the total spectra in the entire wavenumber range of the measurement light in a similar manner.

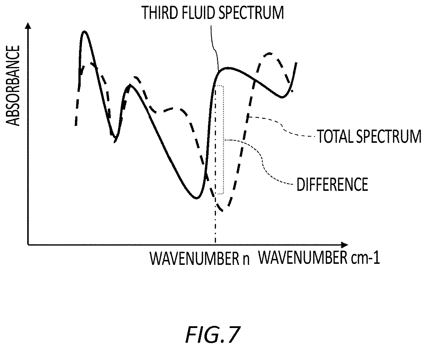

Fig. 7 shows a descriptive drawing of an example of the third fluid spectrum. Fig. 7 shows the total spectrum in a dashed line and the third fluid spectrum in a solid line. The example of Fig. 7 shows, as the third fluid spectrum, an absorption spectrum measured by the eighth sensor unit 194, with the wavenumbers indicated on the horizontal axis and the absorbance indicated on the vertical axis. In Fig. 7, the wavenumber n shows one wavenumber in the wavenumber range of the measurement light. The eighth sensor unit 194 can irradiate the second reaction fluid flowing through the flow channel in the second reaction tube 152 with the irradiation light, detect the measurement light transmitted through the fluid, and thus measure the absorbance from the intensity of measurement light at each wavenumber. The third fluid spectrum in Fig. 7 has a plurality of peaks derived from the solvent, the material of the unreacted amino acid, the target substance, and the like in the second reaction fluid.

For example, the calculation unit 210 calculates the difference between the absorbance of the third fluid spectrum shown in Fig. 7 and the absorbance of the total spectrum shown in Fig. 6 at the wavenumber n to calculate the difference spectrum at the wavenumber n. The calculation unit 210 may calculate the difference spectrum in the entire wavenumber range of the measurement light in a similar manner.

According to the present embodiment, the control apparatus 30 can eliminate the influence of the first fluid and the second fluid before the mixture on the third fluid spectrum, and thus precisely predict the reaction amount in the third fluid. Thus, the control apparatus 30 can monitor the reaction in the reaction apparatus 20 in real time and sense the reaction abnormality quickly, allowing the reduction in the material waste due to the reaction abnormality and thus allowing the reduction in the production cost of the peptide or the like.

Note that, the acquisition unit 200 may include a table, as obtained by experiments or the like, in which the types of materials, reaction conditions, or the like of the fluids are associated with the fluid spectra, and the acquisition unit 200 may acquire the fluid spectrum from the table in step S320. For example, the acquisition unit 200 may acquire, from the table, the fluid spectrum that is associated with the type of the material and the solvent of the material fluid, as the fluid spectrum of the material fluid in at least one flow channel of the first liquid-delivery tube 104, the second liquid-delivery tube 114, the third liquid-delivery tube 124, or the fourth liquid-delivery tube 134.

In addition, the control apparatus 30 may predict the reaction amount of the third reaction fluid in the third reaction tube 162 from the difference spectrum between the total spectrum of the fluid spectrum of the second reaction fluid in the second reaction tube 152 and the fluid spectrum of the fourth material fluid in the fourth liquid-delivery tube 134, and the fluid spectrum measured by the tenth sensor unit 198 arranged in the target substance tank 170. Also in this case, the control apparatus 30 can perform the reaction flow in a similar manner to step S300 to step S370 in Fig. 3.

In addition, the fluid spectrum, the total spectrum, and the difference spectrum may be a distribution of the intensity, the absorbance, or the like of the measurement light in the wavelength range, or may be the intensity, absorbance, or the like of the measurement light at a predetermined one wavelength.

Various embodiments of the present invention may be described with reference to flowcharts and block diagrams whose blocks may represent (1) steps of processes in which operations are performed or (2) sections of apparatuses responsible for performing operations. Certain stages and sections may be implemented by dedicated circuit, programmable circuit supplied together with computer readable instructions stored on computer readable media, and/or processors supplied together with computer readable instructions stored on computer readable media. Dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer readable medium may include any tangible device that can store instructions to be executed by a suitable device, and as a result, the computer readable medium having instructions stored thereon includes a product including instructions that can be executed in order to create means for executing operations designated in the flowcharts or block diagrams. Examples of the computer readable medium may include an electronic storage medium, a magnetic storage medium, an optical storage medium, an electromagnetic storage medium, a semiconductor storage medium, and the like. More specific examples of the computer readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as Smalltalk (registered trademark), JAVA (registered trademark), C++, or the like, and a conventional procedural programming language such as a "C" programming language or a similar programming language.

The computer readable instructions may be provided for a processor or programmable circuit of a general purpose computer, special purpose computer, or other programmable data processing apparatuses such as a computer locally or via a wide area network (WAN) such as a local area network (LAN), the Internet, or the like, and execute the computer readable instructions in order to create means for executing the operations designated in flowcharts or block diagrams. Examples of the processor include a computer processor, a processing unit, a microprocessor, a digital signal processor, a controller, a microcontroller, and the like.

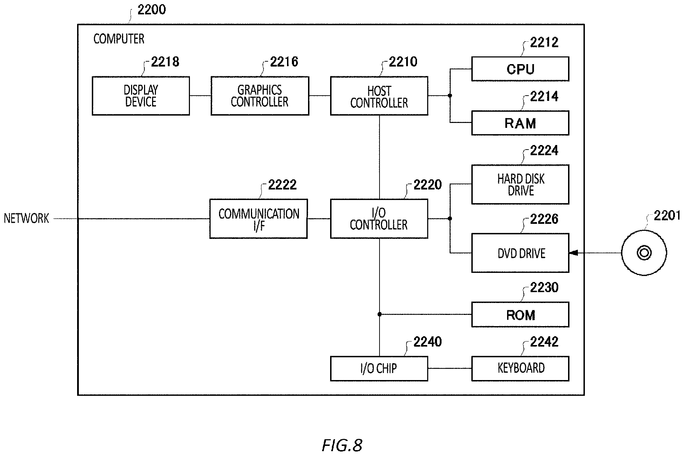

FIG. 8 shows an example of a computer 2200 in which a plurality of aspects of the present invention may be wholly or partly embodied. A program installed in the computer 2200 can cause the computer 2200 to function as an operation associated with the apparatuses according to the embodiments of the present invention or as one or more sections of the apparatuses, or can cause the operation or the one or more sections to be executed, and/or can cause the computer 2200 to execute a process according to the embodiments of the present invention or a step of the process. Such programs may be executed by a CPU 2212 to cause the computer 2200 to perform specific operations associated with some or all of the blocks in the flowcharts and block diagrams described in the present specification.

The computer 2200 according to the present embodiment includes the CPU 2212, an RAM 2214, a graphics controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as an ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 in a frame buffer or the like provided in the RAM 2214 or in itself, such that the image data is displayed on the display device 2218.

The communication interface 2222 communicates with other electronic devices via a network. The hard disk drive 2224 stores programs and data used by the CPU 2212 in the computer 2200. The DVD-ROM drive 2226 reads a program or data from a DVD-ROM 2201 and provides the program or data to the hard disk drive 2224 via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, or the like.

Programs are provided by a computer readable medium such as the DVD-ROM 2201 or the IC card. The programs are read from the computer readable medium, are installed in the hard disk drive 2224, the RAM 2214, or the ROM 2230 which is also an example of the computer readable medium, and are executed by the CPU 2212. The information processing described in these programs is read by the computer 2200, and provides cooperation between the programs and the various types of hardware resources. The apparatus or method may be configured by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing based on processing described in the communication program. Under the control of the CPU 2212, the communication interface 2222 reads transmission data stored in a transmission buffer processing region provided in a recording medium such as the RAM 2214, the hard disk drive 2224, the DVD-ROM 2201, or the IC card, transmits the read transmission data to the network, or writes reception data received from the network in a reception buffer processing region or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Then, the CPU 2212 writes the processed data back in the external recording medium.

Various types of information such as various types of programs, data, tables, and databases may be stored in a recording medium and subjected to information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, is stored in the recording medium, the CPU 2212 may retrieve, out of the plurality of entries, an entry with the attribute value of the first attribute specified that meets a condition, read the attribute value of the second attribute stored in said entry, and thereby acquiring the attribute value of the second attribute associated with the first attribute meeting a predetermined condition.

The programs or software modules described above may be stored in a computer readable medium on or near the computer 2200. In addition, a recording medium such as a hard disk or a RAM provided in a server system connected to a dedicated communication network or the Internet can be used as a computer readable medium, thereby providing a program to the computer 2200 via the network.

While the present invention has been described with the embodiments, the technical scope of the present invention is not limited to the above-described embodiments. It is apparent to persons skilled in the art that various alterations and improvements can be added to the above-described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described by using phrases such as "first" or "next" for the sake of convenience in the claims, specification, and drawings, it does not necessarily mean that the process must be performed in this order.

### EXPLANATION OF REFERENCES

10: reaction system;
20: reactor apparatus;
30: control apparatus;
100: first material tank;
102: first pump;
104: first liquid-delivery tube;
110:second material tank;
112: second pump;
114: second liquid-delivery tube;
120: third material tank;
122: third pump;
124: third liquid-delivery tube;
130: fourth material tank;
132: fourth pump;
134: fourth liquid-delivery tube;
140: first mixer;
142: first reaction tube;
150: second mixer;
152: second reaction tube;
160: third mixer;
162: third reaction tube;
170: target substance tank;
180: first sensor unit;
182: second sensor unit;
184: third sensor unit;
186:fourth sensor unit;
188: fifth sensor unit;
190: sixth sensor unit;
192: seventh sensor unit;
194: eighth sensor unit;
196: ninth sensor unit;
198: tenth sensor unit;
200: acquisition unit;
210: calculation unit;
220: prediction unit;
230: abnormality determination unit;
240: output unit;
2200: computer;
2201: DVD-ROM;
2210: host controller;
2212: CPU;
2214: RAM;
2216: graphics controller;
2218: display device;
2220: input/output controller;
2222: communication interface;
2224: hard disk drive;
2226: DVD-ROM drive;
2230: ROM;
2240: input/output chip;
2242: keyboard.

## Claims

1. An apparatus to predict a reaction amount of a third fluid flowing through a third flow channel obtained by a first fluid flowing through a first flow channel and a second fluid flowing through a second flow channel being mixed and reacted with each other, the apparatus comprising:
an acquisition unit which acquires a first fluid spectrum of the first fluid, a second fluid spectrum of the second fluid, and a third fluid spectrum of the third fluid;
a calculation unit which calculates a difference spectrum between the third fluid spectrum and a total spectrum of the first fluid spectrum and the second fluid spectrum; and
a prediction unit which predicts a reaction amount of the third fluid using the difference spectrum.

2. The apparatus according to claim 1, wherein,
the calculation unit calculates the total spectrum by summing up the first fluid spectrum and the second fluid spectrum that are weighted according to a mixing ratio of the first fluid and the second fluid in the third fluid.

3. The apparatus according to claim 2, wherein,
the calculation unit calculates the total spectrum by summing up the first fluid spectrum and the second fluid spectrum that are weighted according to the mixing ratio based on a flow speed of the first fluid and a flow speed of the second fluid.

4. The apparatus according to claim 2, wherein,
the calculation unit calculates the total spectrum by summing up the first fluid spectrum and the second fluid spectrum that are weighted according to the mixing ratio based on a set value of a pump to cause the first fluid to flow into the first flow channel and a set value of a pump to cause the second fluid to flow into the second flow channel.

5. The apparatus according to claim 2, wherein,
the calculation unit calculates the total spectrum by summing up the first fluid spectrum and the second fluid spectrum that are weighted according to the mixing ratio based on a solvent volume of the first fluid and a solvent volume of the second fluid.

6. The apparatus according to any one of claims 1 to 5, wherein,
the acquisition unit acquires a plurality of third fluid spectra, each being identical to the third fluid spectrum, at a plurality of positions in the third flow channel,
the calculation unit calculates a plurality of difference spectra, each being identical to the difference spectrum, between each of the plurality of third fluid spectra and the total spectrum of the first fluid spectrum and the second fluid spectrum, and
the prediction unit predicts a reaction amount of the third fluid using the plurality of difference spectra.

7. The apparatus according to any one of claims 1 to 5, wherein,
the acquisition unit acquires a plurality of third fluid spectra, each being identical to the third fluid spectrum, at a plurality of positions in the third flow channel, and
the calculation unit calculates the difference spectrum between an average spectrum of the plurality of third fluid spectra and the total spectrum of the first fluid spectrum and the second fluid spectrum.

8. The apparatus according to any one of claims 1 to 7, wherein,
the calculation unit calculates the difference spectrum between the third fluid spectrum and the total spectrum of the first fluid spectrum and the second fluid spectrum which were measured a predetermined period prior to measurement of the third fluid spectrum.

9. A method for predicting a reaction amount of a third fluid flowing through a third flow channel obtained by a first fluid flowing through a first flow channel and a second fluid flowing through a second flow channel being mixed and reacted with each other, the method comprising:
acquiring a first fluid spectrum of the first fluid, a second fluid spectrum of the second fluid, and a third fluid spectrum of the third fluid;
calculating a difference spectrum between the third fluid spectrum and a total spectrum of the first fluid spectrum and the second fluid spectrum; and
predicting a reaction amount of the third fluid using the difference spectrum.

10. A program for predicting a reaction amount of a third fluid flowing through a third flow channel obtained by a first fluid flowing through a first flow channel and a second fluid flowing through a second flow channel being mixed and reacted with each other, the program being executed by a computer and causing the computer to function as
an acquisition unit which acquires a first fluid spectrum of the first fluid, a second fluid spectrum of the second fluid, and a third fluid spectrum of the third fluid;
a calculation unit which calculates a difference spectrum between the third fluid spectrum and a total spectrum of the first fluid spectrum and the second fluid spectrum; and
a prediction unit which predicts a reaction amount of the third fluid using the difference spectrum.
